# EUROPEAN PATENT APPLICATION

(11) **EP 1 067 069 A2**
(43) Date of publication of application: **10.01.2001**
(21) Application number: 00305709.8
(22) Date of filing: 06.07.2000
(51) Int. Cl.: B65G 53/56

(54) **Diverter valve**

(30) Priority: 07.07.1999 GB 9915859
(71) Applicant: Rotaval Limited, Chippenham, Wilts SN14 6LH (GB)
(72) Inventor: Blackmore, Donald Ian, Chippenham, Wilts SN15 5EZ (GB)
(74) Representative: Bryer, Kenneth Robert

(57) **Abstract**

The diverter valve (1) comprises
an inlet port (5),
more than one outlet ports (7a,7b) and
a diverter tube (9) extending therebetween and being movable from a first position in which it is in fluid communication with the inlet port and with one of the outlet ports and a second position in which it is in fluid communication with the inlet port and with another one of the outlet ports.

Sealing means (24) are positioned between each of the inlet and outlet ports and the diverter tube, and
a seal protection member (25) is positioned between the diverter tube and the sealing means of at least one of the outlet ports to protect the sealing means during movement of the diverter tube.

## Description

This invention relates to a diverter or change-over valve for use in apparatus for the conveyance of a material.

There are many industrial processes for which a material has to be conveyed around apparatus. Where a choice of route of conveyance is required a diverter or change-over valve is required in the conveying route. Various designs of diverter or change-over valves are known including flap diverter valves and plug diverter valves, the choice of which depends in part upon the material to be conveyed and its application. The choice of valve, and in particular the nature of construction of the valve, is particularly important in certain applications, for example in the conveying of pharmaceuticals or food where maintaining a hygienic (non-contaminated) and thoroughly clean environment is required. A diverter valve for use in such applications needs to be substantially free of entrapment points, provide effective sealing between component parts, and be easily dismantled to allow quick and easy cleaning between operating cycles. Conventional, i.e. known, diverter valves fall short of complete acceptability in such applications because they include entrapment points, changes in internal conveyance section (which can lead to entrapment points), ineffective sealing between component parts, complex and time consuming cleaning and dismantling cycles and/or are available in a limited range of materials not all of which are suitable for such highly sensitive applications.

Some of the problems of conventional diverter valves are overcome by tube selector valves. A tube selector valve has a diverter tube with axially offset ends mounted with one end at an inlet so that its outer end may be moved between various outlet ports to allow the direction of material being conveyed to be changed by turning it about an axis which passes centrally through one end of the tube. In some such valves, in order to provide adequate sealing between each of the outlets and the diverter tube, the outlets are provided with inflatable seals between the movable diameter tube and the fixed ports. A problem with such known valves it that friction arising between the moving parts causes dragging of the inflatable seals leading to damage and a loss of effective sealing. The problem is such that the inflatable seals need to be deflated to allow commutation of the diverter tube from one position to another. This is a time-consuming process and the required complex seal control system is bulky. Furthermore, such known diverter tube selector valves are not easily cleaned and includes various entrapment areas.

There is, therefore, a need for a diverter valve which overcomes or mitigates some or all of the problems associated with known diverter valves.

According to a first aspect of the present invention there is provided a diverter valve for use in apparatus for the conveyance of a material, which valve comprises:
an inlet port capable of being placed in fluid communication with an inlet duct for conveying the material;
more than one outlet port each of which is capable of being placed in fluid communication with an outlet duct for conveying the material;
a diverter tube extending between the inlet and outlet ports and movable from a first position in which it is in fluid communication with the inlet port and one of the outlet ports and a second position in which it is in fluid communication with the inlet port and with another one of the outlet ports;
sealing means positioned between each of the inlet and outlet ports and the diverter tube; and
a seal protection member positioned between the diverter tube and the sealing means of at least one of the outlet ports to protect the sealing means during movement of the diverter tube.

The seal protection member may be associated with and movable with the diverter tube, e.g. it may be attached to an end thereof. A single movable seal protection member could be used to protect more than one sealing means. Alternatively and preferably the seal protection member is immovable with respect to the sealing means. There is preferably provided a seal protection member between each of the outlet ports and the diverter tube. Additionally a seal protection member may be provided between the inlet port and the diverter tube. The seal protection member, or at least any part of the seal protection member directly in contact with the diverter tube and/or the sealing means, is preferably made from or coated with a low friction material, e.g. a low friction polymer. Suitable materials will be well known to the skilled man and include low friction material such as fluorine-containing polymers such as a polytetrafluoroethyeene (PTFE). The seal protection member may take the form of a disc or plate having a central hole or aperture to allow the fluid communication of the diverter tube and outlet port between which the seal protection member is located. The seal protection member may take the form of a thin annulus, e.g. annular disc, having a thickness of less than one centimetre and preferably of around five millimetres. The seal protection member should be such as to be able to protect the sealing means in particular from being dragged by friction caused by relatively moving parts. It should also be such as to prevent the sealing means from expanding outwards from the outlet port towards the diverter tube which could lead to its becoming trapped. The seal protection member should be provided with sufficient strength, rigidity and/or hardness and be of a sufficient size to fulfil such functions. The seal protection member protects the sealing means during movement of the diverter tube so that the change-over movement can take place without damage occurring to the sealing means. When the sealing means takes the form of an inflatable seal the seal protection member allows the seal to remain inflated throughout the operation, i.e. without delay in operating time. This additionally removes the need for the complex and bulky seal control systems required for conventional diverter valves.

The diverter tube is preferably of a one-piece construction so that the number of interfaces within the diverter valve is minimised. Preferably the number of interfaces within the diverter valve is limited to the number of inlet and outlet ports. The diverter tube is preferably made of a rigid material although it may alternatively be a resilient and/or flexible material. The diverter tube may have a straight or preferably off-set central bore. Where the diverter tube has an off-set shape, it may for example a have reflex curve, a more compact arrangement of the diverter valve can be achieved. The term reflex curve is intended to cover a tube whose overall shape and/or central bore extends, e.g. curves, in one direction within a given plane followed by extending, e.g. curving, in an opposite direction in the same plane. The two curves may be contiguous or separated by a straight section. The tube may be movable from the first to the second position by any suitable movement such as a translational, sliding movement by rotation or swinging or pivoting. By providing an off-set, e.g. reflex curved diverter tube movement between the positions can be effected by a compact movement of rotation of the diverter tube at one end, for example, the inlet end. In such embodiments the diverter tube may be rotably mounted within the inlet port. Rotation of the diverter tube about its longitudinal axis within the inlet port is converted, due to the off-set geometry, to movement of the diverter tube between the outlet ports. The diverter valve is preferably provided with means for moving the tube from the first to the second position. Movement of the diverter tube may, for example, be effected by movement of a movable member to which the diverter tube is attached. The movable member may take any suitable form such as an elongate rod. The movable member preferably takes the form of a movable plate having an aperture through which the diverter tube can be placed in fluid communication with an outlet port. The movable plate is preferably shaped so that it is able to close off at least one of the outlet ports when that port is not in fluid communication with the diverter tube. Preferably the movable plate is shaped to close all of the outlet ports which are not in fluid communication with the diverter tube. The shape of the movable plate will then depend on the position of the outlet ports. Where all the outlet ports are arranged in the same plane the movable plate may be planar, i.e. flat, and shaped within that plane so as to cover the outlet ports as desired. Where the outlet ports are arranged along the arc of a circle the movable plate may be curved in cross section. Preferably the diverter tube is releasably attached to the movable member and most preferably attached thereto by a single or a few easily releasable means. The tube may be moved from the first to the second position manually, but preferably the diverter valve comprises means for mechanically driving the movement of the diverter tube. Such drive means are preferably automatically controllable.

The diverter valve may additionally comprise a housing for accommodating at least the diverter tube. The housing is shaped or may be provided with openings or cut-outs to allow the diverter tube to be placed in fluid communication with the inlet and outlet ports. Some or all of the inlet and outlet ports may extend into the housing. The movable member, e.g. movable plate, where present may be movably mounted on the housing. It is preferably mounted thereon by a single easily releasable fixing means. The housing may also be adapted to accommodate drive means for moving the diverter tube or movable member.

The number of outlet ports in the diverter valve is at least two but three, four or more could be provided as desired or required. The outlet ports should be arranged along the path of travel of the diverter tube. The outlet ports may, therefore, be arranged linearly or arranged around the circumference of a circle in a horizontal or a vertical plane or in both planes. The outlet ports are all preferably at the same distance from the inlet port. If not, the diverter tube is preferably capable of absorbing or compensating for the differences in that distance, e.g. a resilient, compressible and expandable diverter tube is provided.

The sealing means positioned between each of the inlet and outlet ports and the diverter tube may be the same or different. The sealing means may act directly or indirectly between the diverter tube and the outlet ports or inlet port. Preferably sealing means are provided at each interface within the diverter valve. The sealing means preferably act on the outer wall of each interface or connection. When the diverter tube is housed within a housing the sealing means between the diverter tube and the inlet and outlet ports preferably act between the outer wall of the housing and the inlet and outlet ports. Each of the sealing means is preferably capable of maintaining a fluid tight seal within the valve irrespective of whether the port with which it is associated is or is not in fluid communication with the diverter tube. Advantageously the sealing means remain in full sealing condition and act against the diverter tube at all times during operation of the diverter valve, i.e. even when conveyance through their associated port is not taking place. The sealing means used is preferably one that does not deteriorate during use, but is one able to allow a constant sealing force to be applied throughout the lifetime of the diverter valve. Suitable sealing means will be well known to the skilled man. The sealing means preferably include an inflatable seal and preferably one able to act simultaneously radially inwards and axially. An inflatable seal may be energised, e.g. inflated, during operation of the diverter valve but may be deflated to allow dismantling, e.g. for cleaning to take place. Due to the presence of the seal protection member an inflatable seal can remain inflated during movement of the diverter tube and does not need to be deflated for the purpose. The sealing means may take the form of a disc, plate or gasket, preferably of an elastomeric material. Preferably the sealing means provided for each outlet is substantially identical.

More than one inlet port may be provided. Where more than one inlet port is present a diverter tube may be movable between each and all inlet ports. Such a diverter tube may be fixed to one outlet port or may be movable between more than one outlet port. In this respect the term outlet and inlet as used herein relates to the direction of conveyance of material such that if the direction of conveyance is reversed an outlet port becomes an inlet port and vice versa. The inlet port is preferably adapted to allow for the rotatable mounting of the diverter tube therein. Such adaptation may include the provision of a ring bearing.

It has unexpectedly been found that for certain embodiments of the present invention the full ring bearing used in conventional rotating tube diverter valves can be eliminated.

According to a second aspect of the present invention there is provided a diverter valve for use in apparatus for the conveyance of a material, which valve comprises:
an inlet port capable of being placed in fluid communication with an inlet duct for conveying the material;
more than one outlet port each of which is capable of being placed in fluid communication with an outlet duct for conveying material;
a diverter tube extending between the inlet and outlet ports and rotably mounted at one end within the inlet port and attached at its other end to a movable plate, which movable plate is provided with an aperture through which the diverter tube may be placed in fluid communication with one outlet port and which is shaped so as to close off at least one outlet port when that port is not in fluid communication with the diverter tube;
sealing means positioned between each of the inlet and outlet ports and the diverter tube, the sealing means between the diverter tube and at least one of the outlet ports being capable of acting against the movable plate when that port is not in fluid communication with the diverter tube; and
a partial bearing in which the diverter tube is rotably mounted within the inlet port, the arrangement being such that the diverter tube can be rotated from a first position in which it is in fluid communication with one of the outlet ports to a second position in which it is in fluid communication with another one of the outlet ports.

The partial bearing may take the form of a half-ring, i.e. a disc defined between two semi-circles. It is not essential that the partial bearing be exactly a half-bearing and partial bearings extending over less than 180° may be employed.

The internal bores throughout the diverter valve are preferably uniform so that there are no entrapment points. Preferably the inner bore of the inlet port, diverter tube, movable plate where present, seal protection member, sealing means and outlet port are of the same dimensions and preferably those dimensions are substantially identical to those of the inlet and outlet and other ducts of the apparatus through which the material is to be conveyed.

The number of fixings between the relevant components is preferably kept to a minimum. Any such fixings are preferably not exposed in any passages through which the material is conveyed through the diverter valve. Indeed it has unexpectedly been found possible for certain embodiments of the present invention to eliminate the cumbersome and time consuming fixings required for conventional diverter valves.

According to a third aspect of the present invention there is provided a diverter valve for use in apparatus for the conveyance of a material, which valves comprises:
an inlet port capable of being placed in fluid communication with an inlet duct for conveying the material;
more than one outlet port each of which is capable of being placed in fluid communication with an outlet duct for conveying the material;
a diverter tube extending between the inlet and outlet ports, the diverter tube being movably mounted and secured by a single fixing within the valve so as to be movable from a first position in which it is in fluid communication with one of the outlet ports to a second position in which it is in fluid communication with another one of the outlet ports; and
sealing means positioned between each of the inlet and outlet ports and the diverter tube, which sealing means are capable of acting axially against the diverter tube, the arrangement being such that the diverter tube may be detached from the rest of the valve by release of the single fixing.

The single fixing is preferably manually releasable so no tools are required. In use the diverter tube is held in place by the action of the sealing means and the single fastening. It can be easily removed for cleaning by countering or release of the pressure from the sealing means. In such embodiments the sealing means are preferably inflatable seals with release effected by deflation. It is also preferred that the diverter tube be attached to a movable plate on which the seals are capable of acting. It is additionally preferred that the inlet and outlet ports are mounted with a minimum number of fixings. Particularly suitable are quick, manually releasably fastenings such as bayonet or turnbuckle fastenings or keyhole aperture fixings which can be released by sliding or rotation.

The diverter valve may be provided with a cover to protect the moving parts. The cover is advantageously provided with means by which it can be locked into position. The locking means may be such as to prevent or inhibit removal of the cover whilst the valve is in operation. Release of the locking means may lead to automatic cut-out of the means by which the diverter tube is moved and/or release of sealing means, e.g. deflation of inflated seals.

The diverter valve may be formed from materials which are suitable or can be made suitable for use in the processing of sensitive materials, e.g. pharmaceuticals and food. The simplicity of the component shapes and the manner in which they may be assembled allows an extensive range of alternative materials to be used for alternative applications. Where required suitable coatings may be applied to allow the diverter valve to be used in sensitive applications. In addition relatively movable parts of the diverter valve, e.g. the movable member where present, may be formed from or coated with a low friction material.

The diverter valve of the present invention may be used in the conveyance of a bulk material such as a liquid or solid and in particular is suited to the conveyance of a solid in powder or granular form. The diverter valve is particularly suitable for use in processing materials where an hygienic or sensitive environment is required. Examples of products or materials which may be conveyed include flour, milk-powder or sugar. Both aggressive and non-aggressive materials can be accommodated.

According to the present invention there is further provided apparatus for the conveyance of a material including a diverter valve according to any aspect of the present invention.

The material may be conveyed through such apparatus by gravity, or more preferably be driven, e.g. mechanically. The apparatus may, for example, be provided with means for pressure driving the conveyance of the material, e.g. by means of a gas. More than one diverter valve either in parallel or in series, i.e. in succession or side-by-side, may be provided in the apparatus.

According to the present invention there is yet further provided a method of diverting material being conveyed from an inlet to a first outlet provided with sealing means by conveying that material to a second outlet provided with sealing means, which method comprises conducting the material from the inlet port into a diverter tube which may be moved from being in fluid communication with the first outlet to being in fluid communication with the second outlet and moving the diverter tube so that it is in fluid communication with the second outlet, which method additionally comprises the step of protecting the sealing means of at least one of the outlets by providing a seal protection member located between the diverter tube and the sealing means of at least one of the outlets.

The present invention is advantageous as it provides a diverter valve which is quick and easy to dismantle, may be cleaned to very high standards and quickly, may be formed from a minimum number of components, has a minimum number of entrapment points, may be formed with a uniform internal cross section to avoid entrapment points, provides a high standard of sealing, may be manufactured in a variety of materials to allow versatility in application, may include a minimum number of interfaces, allows outlet seals to be protected from wear and damage, and does not lead to delays in operating times as there is no need for a separate step to be taken in order to protect the seals during change-over, i.e. movement of the valve, e.g. there is no need to deflate and inflate seals.

For a better understanding of the present invention and to show how it may be put into effect, reference will now be made, for the purposes of illustration only, to the accompanying drawings in which:

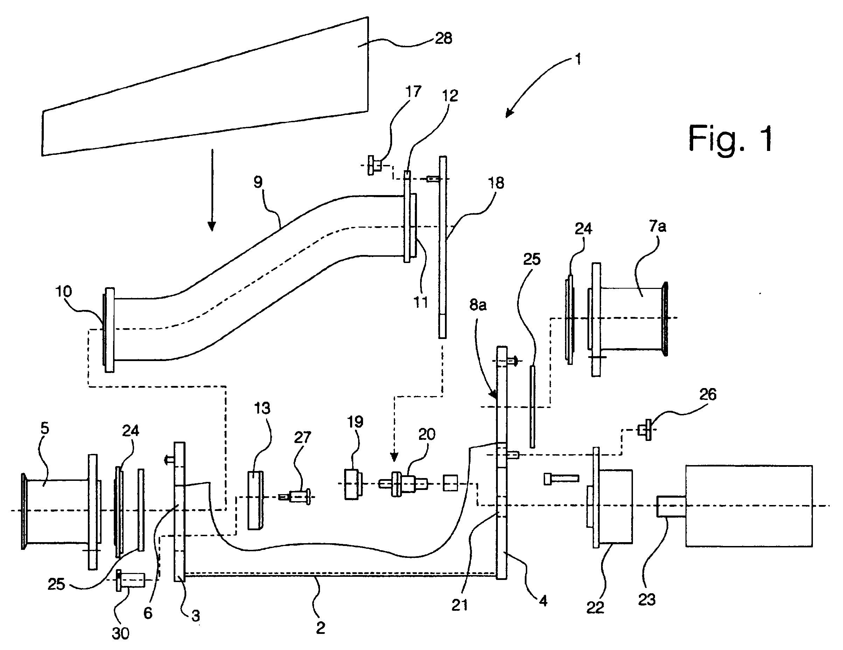

Figure 1 is a side view of one embodiment of the present invention in exploded form;

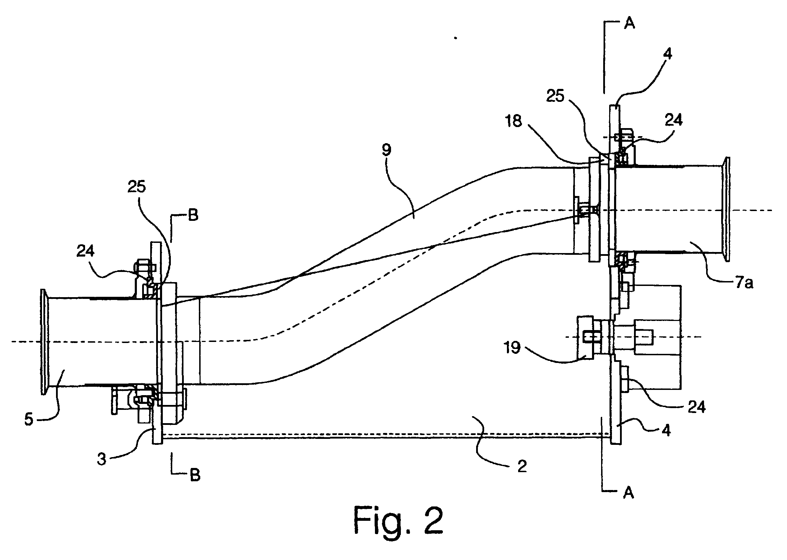

Figure 2 is a side view of the embodiment of Figure 1 in assembled form;
Figure 3 is a enlarged detail of part of the embodiment shown in Figure 2;
Figure 4 is a cross sectional view taken along line A to A of Figure 3; and

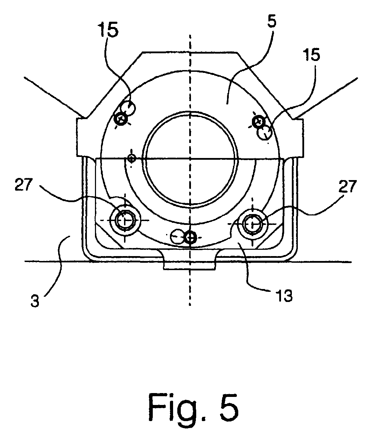

Figure 5 is a cross-sectional view taken along line B to B of Figure 2.

The embodiment of a diverter valve 1 shown in the drawings comprises a housing 2 being open-topped and having a front wall 3 and a rear wall 4. A circular cylindrical inlet port 5 is received within a circular opening 6 positioned in the front wall 3 of the housing 2. A pair of circular cylindrical outlet ports 7a, 7b are accommodated within a pair of apertures 8a, 8b located in the rear wall 4 of the housing 2. Accommodated within the housing 2 is a diverter tube 9 having a front reflex curve and a front end 10 which can be placed in fluid communication with the inlet port 5 and a rear end 11 which can be placed in fluid communication with either of the outlet ports 7a, 7b. The front end 10 of the tubing 9 is rotably mounted within a half-bearing 13 affixed to the inlet port 5. The rear end 11 of the diverter tube 9 is provided with a collar 12 by which the diverter tube 9 may be fastened by a single fastener 17 to a plate 18. The plate 18 is pivotally mounted to the rear wall 4 of the housing 2 by a easily releasable quick release nut 19 on a drive spindle 20 mounted within a further opening 21 located in the rear wall 4 of the housing 2. The drive spindle 20 is mounted within a mounting 22 for an actuator 23. The inlet port 5 and each of the outlet ports 7a, 7b is provided with an inflatable seal 24 which is located between the port and the front 3 or rear 4 wall of the housing 2. The seals 24 extend into the openings 6 or 8a, 8b provided in those wall 3, 4. Each inflatable seal 24 is provided with a seal protection member 25 which in use is positioned between the inflatable seal 24 and the diverter tube 9. The seal protection members 25 are in the form of annular discs which fit within the apertures 6, 8a, 8b formed in the front 3 and rear 4 walls of the housing 2. The actuator 23 is fixed via its mounting 22 to the rear wall 4 of the housing 2 by a single quick release nut 26. The inlet port 5 and the outlet port 7a, 7b are fixed in position be quick release fixings. Rotation of the ports 5, 7a, 7b in one direction snap fits them into a narrow end of a keyhole shaped aperture 15 and rotation in the other direction allows their release through a larger sized end of the aperture 15. The half-bearing 13 is held in place on the front 3 wall of the housing 2 by two bearing pins 27 held in place by quick release nuts 30. The housing 2 is provided with a cover 28 which fits over the housing 2 and covers the diverter tube 9.

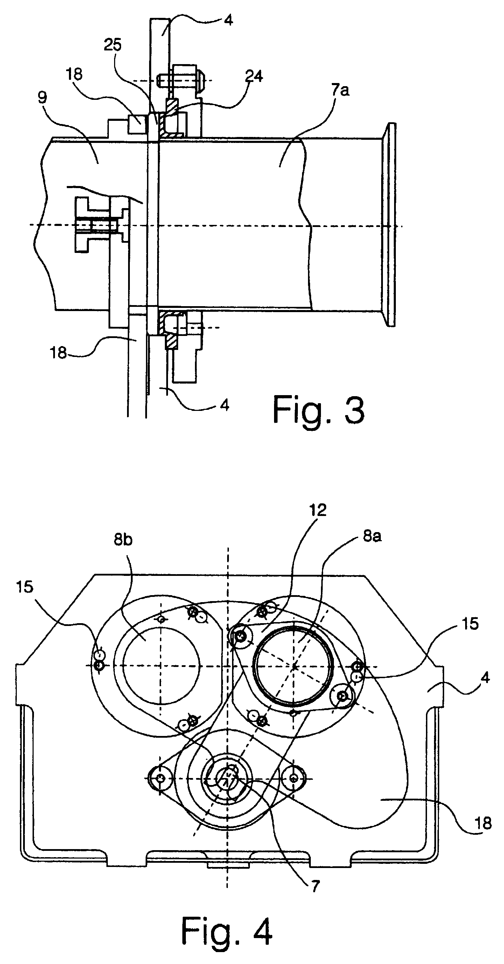

In use the actuator 23 drives the plate 18 to pivot between a first position shown in Figure 4 in which the diverter tube 9 is in fluid communication with one of the outlet ports 7a to a second position in which the diverter tube 9 is in fluid communication with the other outlet port 7b.

The inflatable seals 24 remain inflated during the operating cycle, including changes of position. They are only deflated when the cover 28 is removed for a cleaning cycle, allowing free removal of the diverter tube 9 from the housing 2. The annular discs 25 are formed from or coated with a low friction polymer such as PTFE and being positioned between the inflatable seals 24 and the moving face allow the diverter tube 9 to slide easily during its pivoting movement thereby protecting the inflatable seals 24 from wear and damage. The protecting discs 25 allow the use of inflatable seals 24 which are able to provide a constant sealing force and to apply that force throughout the life of the valve 1. As the seals 24 can be energised, i.e. inflated, throughout operation including changes of position, seals are provided on all ports whether they are used or unused so that leakage rates will be neglible. In addition the use of inflatable seals 24, acting against the outer walls 3, 4 of the housing 2, minimises the annulus formed at the intersections as they are able to act simultaneously radially inwards and axially at each end connection. The axial force of the seals 24 acts against the tubing 9 and the plate 18 thereby holding them in place.

The diverter tube 9 has a reflex curve or bend. The relative dimensions of the bend allows this component to be compact, which also allows the adjoining components to be similarly compact. The tube 9 is held in position by a single fixing which can be removed by hand. The relative positioning of the inlet 5 and outlet 7a, 7b ports and the geometry of the tubing 9 eliminates the needs for any further fixing. Moreover, as will be appreciated from the drawings, the forces exerted by the inflatable seals, whatever the position of the diverter tube, apply only forces in a limited range of directions (downwards as viewed in the drawings) which can all be resisted by the bearing 13 which extends over only half the circumference of the tube. Dismantling of the valve 1 is thus easily and quickly effected since the assembly comprising the diverter tube 9 and the plate 18 can be removed by releasing the fixing 19 by hand and lifting the assembly from the bearing 13 without any need to dismantle the bearing. Releasing the air pressure to the inflatable seals 24 allows dismantling by giving a clearance upon deflation between the tube 9 and the outlet ports 7a, 7b. The single fixing 19 holding the tube 9 and the plate 18 may be released by hand as can the other fixings associated with the seals 24, drive 20 and actuator 23. The cover 28 is entirely removable and may be fixed in place by quick release fasteners if desired. An interlock device (not shown) may be fitted to the cover 28 so that the cover 28 cannot be removed without first cutting of the air supply to both the actuator 23 and the inflatable seals 24 simultaneously. Removal of the tube 9 is also revisited by the pressure from the inflatable seals 24. The tube only becomes removable when the seals 24 have been depressurised. This increases the operating safety of the valve 1. The tube 9 is made from a single piece of pipe, formed to shape. The three interfaces of the tube 9 meet on a plane at right angles to the bore of the tube 9. Each end connection bore is matched in shape size and dimensions to the bore of the tube 9. Also the bore of the protecting disc 25 is matched to the bore of the tube 9 and the position of the tube 9 at each stop position at which it is accurately aligned with the bore of one of the outlets 7a, 7b may be fixed using fixed stops. Having a uniform, constant bore with all intercommunicating components eliminates entrapment points. The housing has curved intersections, homogeneously welded, crack and crevice free and there are no exposed threads or heads of fixings within the housing, again to eliminate entrapment points. There are very few components within the valve, each of which may be removed completely for extensive cleaning and then replaced easily with no loss of accuracy. Further, all internal and external surfaces made be cleaned and/or polished to a very fine finish. The diverter valve 1 may be formed or coated with materials suitable for use in sensitive environments, e.g. in the conveyance of food or pharmaceuticals. The simplicity of the component shapes and the methods by which they may be fabricated allow an extensive range of alternative materials to be used for alternative applications. Surface finish requirements can be met because of the homogeneity of material and the accessibly inside and out.

## Claims

1. A diverter valve for use in apparatus for the conveyance of a material, which valve comprises:
an inlet port capable of being placed in fluid communication with an inlet duct for conveying the material;
more than one outlet port each of which is capable of being placed in fluid communication with an outlet duct for conveying the material;
a diverter tube extending between the inlet and outlet ports and movable from a first position in which it is in fluid communication with the inlet port and with one of the outlet ports and a second position in which it is in fluid communication with the inlet port and with another one of the outlet ports;
sealing means positioned between each of the inlet and outlet ports and the diverter tube; and
a seal protection member positioned between the diverter tube and the sealing means of at least one of the outlet ports to protect the sealing means during movement of the diverter tube.

2. A valve according to Claim 1, wherein a seal protection member is provided between each of the outlet ports and the diverter tube.

3. A valve according to Claim 1 or 2, wherein the seal protection member or at least those parts of it in direct contact with the sealing means and/or the diverter tube is formed from or coated with a low friction material.

4. A valve according to Claim 1, 2 or 3, wherein the seal protection member is an annular disc.

5. A valve according to any preceding claim, wherein the diverter tube is pre-formed into an S-shape.

6. A valve according to any preceding claim, wherein movement of the diverter tube is effected by a pivoting motion.

7. A valve according to any preceding claim, wherein movement of the diverter tube is effected by movement of a movable member to which the diverter tube is attached.

8. A valve according to Claim 7, wherein the movable member is pivotally mounted.

9. A valve according to Claim 7 or 8, wherein the movable member is a plate having an aperture for receiving the diverter tube and being shaped so as to be able to close off at least one of the outlet ports when that port is not in fluid communication with the diverter tube.

10. A valve according to any preceding claim, wherein there is additionally provided drive means for driving the movement of the diverter tube from the first to the second position.

11. A valve according to any preceding claim, wherein the sealing means are capable of maintaining a fluid tight seal within the valve irrespective of whether the port with which they are associated is or is not in fluid communication with the diverter tube.

12. A valve according to any preceding claim, wherein the sealing means includes an inflatable seal.

13. A valve according to any preceding claim, wherein there is additionally provided a housing within which at least the diverter tube is accommodated, which housing is shaped or provided with openings or cut-outs through which the diverter tube may be placed in fluid communication with the inlet and outlet ports.

14. A valve according to Claim 13, wherein the diverter tube is attached to a movable member which is movably mounted on the housing.

15. A diverter valve for use in apparatus for the conveyance of a material, which valve comprises:
an inlet port capable of being placed in fluid communication with an inlet duct for conveying the material;
more than one outlet port each of which is capable of being placed in fluid communication with an outlet duct for conveying material;
a diverter tube extending between the inlet and outlet ports and rotably mounted at one end within the inlet port and attached at its other end to a movable plate, which movable plate is provided with an aperture through which the diverter tube may be placed in fluid communication with one outlet port and which is shaped so as to close off at least one outlet port when that port is not in fluid communication with the diverter tube;
sealing means positioned between each of the inlet and outlet ports and the diverter tube, the sealing means between the diverter tube and at least one of the outlet ports being capable of acting against the movable plate when that port is not in fluid communication with the diverter tube; and
a half bearing in which the diverter tube is rotably mounted within the inlet port, the arrangement being such that the diverter tube can be rotated from a first position in which it is in fluid communication with one of the outlet ports to a second position in which it is in fluid communication with another one of the outlet ports.

16. A diverter valve for use in apparatus for the conveyance of a material, which valves comprises:
an inlet port capable of being placed in fluid communication with an inlet duct for conveying the material;
more than one outlet port each of which is capable of being placed in fluid communication with an outlet duct for conveying the material;
a diverter tube extending between the inlet and outlet ports, the diverter tube being movably mounted and secured by a single fixing within the valve so as to be movable from a first position in which it is in fluid communication with one of the outlet ports to a second position in which it is in fluid communication with another one of the outlet ports; and
sealing means positioned between each of the inlet and outlet ports and the diverter tube, which sealing means are capable of acting axially against the diverter tube, the arrangement being such that the diverter tube may be detached from the rest of the valve by release of the single fixing.

17. A valve according to any preceding claim, wherein the inlet port, diverter tube, outlet ports, sealing means, and seal protection member all have the same internal bore.

18. Apparatus for the conveyance of a material which includes a valve according to any preceding claim.

19. A method of diverting material being conveyed from an inlet to a first outlet provided with sealing means by conveying that material to another or second outlet provided with sealing means, which method comprises conducting the material from the inlet into a diverter tube which may be moved from a position in which it is in fluid communication with the first outlet to a position in which it is in fluid communication with the second outlet, and moving the diverter tube from the first to the second position, which method additionally includes the step of protecting the sealing means of at least one of the outlets by providing a seal protection member located between the diverter tube and the seal of at least one of the outlets.

20. A diverter valve of the type having a diverter tube the end of which are offset from one another and one of which can be engaged with different ports of the valve upon displacement about an axis defined by the other end of the diverter tube, in which the said other end is rotatably mounted to a fixed part of the valve by a bearing extending partially around the diverter tube, such bearing reacting forces applied thereto by the diverter tube in any orientation thereof determined by positioning of the said one end in engagement with a selected port.

21. A diverter valve of the type in which one end of a diverter tube is displaced laterally between at least two different positions each of which it makes face-to face contact with a different port of the valve, in which there is provided an intermediate element made of or coated with a low friction material between the ports and the adjacent end of the diverter tube whereby to reduce the magnitude of the frictional forces in play upon commutation from one position to another.
